# EUROPEAN PATENT APPLICATION

(11) **EP 4 539 235 A1**
(43) Date of publication of application: **16.04.2025**
(21) Application number: 23917093.9
(22) Date of filing: 11.10.2023
(51) Int. Cl.: H01M 50/411, H01M 50/443, H01M 50/449, H01M 10/04, H01M 50/409

(54) **ELECTRODE ASSEMBLY, BATTERY CELL, BATTERY AND ELECTRIC DEVICE**

(30) Priority: 17.01.2023 CN 202310070849
(71) Applicant: Contemporary Amperex Technology (Hong Kong) Limited, Hong Kong (HK)
(72) Inventor: LI, Xiao, Ningde, Fujian 352100 (CN)
(74) Representative: von Tietzen und Hennig, Nikolaus
(86) International application number: PCT/CN2023/123964
(87) International publication number: WO 2024/152625

(57) **Abstract**

The present application provides an electrode assembly, a battery cell, a battery, and an electrical device. The electrode assembly includes a positive electrode plate, a negative electrode plate, a separator, and an organic coating. The separator is disposed between the positive electrode plate and the negative electrode plate. The organic coating is disposed on a side of the positive electrode plate facing the separator and/or on a side of the separator, and the organic coating includes organic particles that react with dendrites containing metal elements.

## Description

### CROSS REFERENCE TO RELATED APPLICATION

The present application claims priority to Chinese patent application No. 202310070849.5, entitled "ELECTRODE ASSEMBLY, BATTERY CELL, BATTERY, AND ELECTRICAL DEVICE" filed on January 17, 2023, which is incorporated herein by reference in its entirety.

### TECHNICAL FIELD

The present application relates to the field of battery technology, specifically to an electrode assembly, a battery cell, a battery, and an electrical device.

### BACKGROUND

With the increasing scarcity of traditional energy, new energy has gradually become one of important energy sources in various industries. As one of the representatives of new energy, batteries have been widely used in various industries with the rapid development of battery technology, such as electric tools, electric transportation vehicles, and energy storage equipment. In order to meet the growing demands of various industries, the requirements for battery performance such as safety performance are increasing. Therefore, it is urgent to improve the safety performance of batteries to meet the increasing demands of various industries.

### SUMMARY

The present application provides an electrode assembly, a battery cell, a battery, and an electrical device, where the electrode assembly can improve the safety performance of the battery.

In a first aspect, embodiments of the present application provide an electrode assembly, including a positive electrode plate, a negative electrode plate, a separator, and an organic coating. The separator is disposed between the positive electrode plate and the negative electrode plate. The organic coating is disposed on a side of the positive electrode plate facing the separator and/or on a side of the separator, and the organic coating includes organic particles that react with dendrites containing metal elements.

In the electrode assembly provided in the present application, the organic coating is provided on a side of the positive electrode plate facing the separator and/or on a side of the separator, the organic coating includes organic particles that react with dendrites containing metal elements, dendrites containing metal elements may be formed inside a battery during use, and the dendrites growing to a certain extent will come into contact with the organic particles in the organic coating and react to generate gas, which reduces the probability of short circuits occurring inside the battery due to the electrical connection between the positive and negative electrode plates and can increase the pressure inside the battery and burst an explosion-proof valve of the battery to release pressure, thereby reducing the risk of battery explosion and improving the safety performance of the battery.

According to any of the foregoing embodiments in the first aspect of the present application, the organic particles include reactive groups that react with dendrites containing sodium metal elements. The reactive groups can quickly react with the dendrites containing sodium metal elements, thereby effectively reducing the occurrence of short circuits inside the battery due to the electrical connection between the positive and negative electrode plates by the dendrites, reducing the risk of battery explosion, and then improving the safety performance of the battery.

According to any of the foregoing embodiments in the first aspect of the present application, the reactive groups include at least one of carboxyl, hydroxyl, amino, thiol, phenolic hydroxyl, or biphenyl groups. The above reactive groups are prone to reaction with the dendrites containing sodium metal elements, which can effectively reduce the occurrence of electrical connection between the positive and negative electrodes by the dendrites, thereby further improving the safety performance of the battery.

According to any of the foregoing embodiments in the first aspect of the present application, materials of the organic particles include at least one of benzoic acid, benzophenone, azoindoleacetic acid, phenol, or biphenyl.

According to any of the foregoing embodiments in the first aspect of the present application, the organic coating includes at least one of mesh organic coatings, dot organic coatings, or striped organic coatings. The coatings can improve the safety and cycle performance of the battery.

According to any of the foregoing embodiments in the first aspect of the present application, the organic coating is disposed on a side of the positive electrode plate facing the separator. The organic coating is disposed on the side of the positive electrode plate facing the separator, which can effectively reduce the occurrence of short circuits inside the battery due to the electrical connection between the positive and negative electrodes by dendrites, thereby further improving the safety performance of the battery.

According to any of the foregoing embodiments in the first aspect of the present application, the organic coating has a thickness H1 of 2 µm to 10 µm. The thickness of the organic coating within the above range can further improve the safety performance of the battery and provide an appropriate thickness for the organic coating to fill more active materials, thereby increasing the energy density of the battery.

According to any of the foregoing embodiments in the first aspect of the present application, the separator includes a first base film and a second base film, and the organic coating is disposed between the first base film and the second base film. The separator includes the first base film and the second base film, which can improve the mechanical strength of the separator and then reduce puncture of the separator by dendrites. Moreover, the organic coating is disposed between the first base film and the second base film, so that the organic particles in the organic coating react with the dendrites that puncture the first base film or the second base film, to further reduce complete puncture of the separator by the dendrites, thereby further improving the safety performance of the battery.

According to any of the foregoing embodiments in the first aspect of the present application, the organic coating has a thickness of 2 µm to 10 µm. The thickness of the organic coating within the above range can reduce the probability that the dendrites electrically connect the positive and negative electrodes to improve the safety performance of the battery, and can also increase the filling space of active materials to increase the energy density of the battery.

According to any of the foregoing embodiments in the first aspect of the present application, the first base film has a thickness of 5 µm to 20 µm.

According to any of the foregoing embodiments in the first aspect of the present application, the second base film has a thickness of 5 µm to 20 µm.

According to any of the foregoing embodiments in the first aspect of the present application, the organic coating has a surface density of 1.5 g/m2 to 4.0 g/m2. When the surface density of the organic coating is within the above range, the organic coating can effectively reduce the electrical connection between the positive and negative electrodes by the dendrites.

According to any of the foregoing embodiments in the first aspect of the present application, the organic coating further includes a binder, and based on a mass of the organic coating, a mass ratio of the binder to the organic particles is (1-5): (10-90). The addition of the binder can improve the adhesion of the organic coating, thereby improving the bonding force between the organic coating and the positive and negative electrode plates and separator, and reducing detachment of the organic coating. Moreover, when the mass ratio of the binder to the organic particles satisfies the above relationship, the organic coating can have good adhesion and react with dendrites to remove more dendrites, thereby further improving the safety performance of the battery.

According to any of the foregoing embodiments in the first aspect of the present application, a mass percentage of the binder in the organic coating is 1% to 5%.

According to any of the foregoing embodiments in the first aspect of the present application, a mass percentage of the organic particles in the organic coating is 80% to 90%. When the mass percentage of the organic particles in the organic coating is within the above range, the organic coating can react to remove more metal elements, thereby further reducing the electrical connection between the positive and negative electrodes by dendrites, and effectively improving the safety performance of the battery.

In a second aspect, the present application provides a battery cell, including the electrode assembly described in the first aspect of the present application.

In a third aspect, the present application provides a battery, including the battery cell in the second aspect of the present application.

In a fourth aspect, the present application provides an electrical device, including the battery in the third aspect of the present application.

The above description is only a summary of the technical solutions of the present application. In order to understand the technical means in the present application more clearly, it can be implemented in accordance with the content of the description; and in order to make the above and other objectives, features and advantages of the present application more obvious and easier to understand, and specific embodiments of the present application are cited below.

### BRIEF DESCRIPTION OF THE DRAWINGS

By reading the detailed description of optional embodiments below, various other advantages and benefits will become clear to those skilled in the art. The accompanying drawings are only used for illustrating the optional embodiments and are not considered as limitations on the present application. Moreover, in all the drawings, the same reference numerals denote the same components.
Fig. 1 illustrates a schematic structural view of a battery cell provided in some embodiments of the present application.
Fig. 2 illustrates an exploded view of the battery cell in Fig. 1.
Fig. 3 illustrates a schematic structural view of a battery module provided in some embodiments of the present application.
Fig. 4 illustrates a schematic structural view of a battery pack provided in some embodiments of the present application.
Fig. 5 illustrates an exploded view of the battery pack in Fig. 4.
Fig. 6 illustrates a schematic structural view of an electrical device provided in some embodiments of the present application.

The accompanying drawings are not drawn to actual scale. Reference numerals are described as follows:
1 - battery pack, 2 - upper box, 3 - lower box, 4 - battery module, 5 - battery cell, 51 - shell, 52 - electrode assembly, 53 - cover plate.

### DETAILED DESCRIPTION

Embodiments of the technical solutions of the present application will be described in detail below with reference to the accompanying drawings. The following embodiments are used only for illustrating the technical solutions of the present application more clearly and therefore are only examples with no intention of limiting the protection scope of the present application.

Unless otherwise defined, all technical and scientific terms used herein have the same meanings as those commonly understood by technical personnel in the technical field of the present application; the terms used herein are only for the purpose of describing specific embodiments and are not intended to limit the present application; and the terms "include" and "have" in the description and claims of the present application, the above accompanying drawings, and any variations thereof, are intended to cover non-exclusive inclusion.

In the description of the embodiments of the present application, the technical terms "first", "second", and the like are only used for distinguishing different objects and cannot be understood as indicating or implying relative importance or implying a quantity, specific order, or primary and secondary relationship of the indicated technical features. In the description of the embodiments of the present application, the meaning of "a plurality of" is two or more, unless otherwise specifically defined.

The phrase "embodiment" referred to herein means that specific features, structures, or characteristics described in conjunction with the embodiment may be included in at least one embodiment of the present application. The phrase appearing at various places in the description does not necessarily refer to the same embodiment, or an independent or alternative embodiment exclusive of other embodiments. Those skilled in the art understand explicitly and implicitly that an embodiment described herein may be combined with another embodiment.

In the description of the embodiments of the present application, the term "and/or" in the present application is merely an association relationship for describing associated objects, and represents that three relationships may exist. For example, A and/or B may represent the following three cases: A exists alone, both A and B exist, and B exists alone. In addition, the character "/" herein generally indicates an "or" relationship between successive associated objects.

In the description of the embodiments of the present application, the term "a plurality of" means two (inclusive) or more. Similarly, "a plurality of groups" means two (inclusive) or more groups, and "a plurality of pieces" means two (inclusive) or more pieces.

In the description of the embodiments of the present application, an orientation or positional relationship indicated by the technical term "center", "longitudinal", "transverse", "length", "width", "wall thickness", "upper", "lower", "front", "rear", "left", "right", "vertical", "horizontal", "top", "bottom", "inner", "outer", "clockwise", "counterclockwise", "axial direction", "radial direction", "circumferential direction", or the like is based on an orientation or positional relationship shown in the accompanying drawings, and is merely for ease of describing the embodiments of the present application and simplifying the description, but does not indicate or imply that an apparatus or an element referred to must have a specific orientation or be constructed and operated in a specific orientation, and therefore cannot be understood as a limitation on the embodiments of the present application.

In the description of the embodiments of the present application, unless otherwise explicitly specified and defined, the technical terms "mounted", "connected", "connection", "fixed", etc. should be understood in a broad sense, for example, the "connection" may be fixed connection, detachable connection, integration, mechanical connection, electrical connection, direct connection, indirect connection via an intermediate medium, internal communication between two elements, or interaction between two elements. Those of ordinary skill in the art may appreciate the specific meanings of the foregoing terms in the embodiments of the present application according to specific circumstances.

In the present application, a battery is mainly composed of one or more battery cells, each of which includes a shell, an end cover, and an electrode assembly accommodated in the shell, where the electrode assembly is a component that undergoes electrochemical reactions in the battery cell. Specifically, the electrode assembly is mainly formed by winding or laminating a positive electrode plate and a negative electrode plate, and a separator is usually provided between the positive electrode plate and the negative electrode plate.

During the use of the battery, as the number of cycles increases, dendrites are formed on the surface of the negative electrode plate due to uneven deposition of metal ions. Having grown to a certain extent, the dendrites will puncture the separator and continue to grow in their length direction until contacting the positive electrode plate, resulting in electrical connection between positive and negative electrodes in the battery to form internal short circuits, thereby reducing the safety performance of the battery.

In view of this, the present application provides an electrode assembly, a battery cell, a battery, and an electrical device, where the electrode assembly can improve the safety performance of the battery.

### Electrode assembly

In a first aspect, the present application provides an electrode assembly, including a positive electrode plate, a negative electrode plate, a separator, and an organic coating. The separator is disposed between the positive electrode plate and the negative electrode plate. The organic coating is disposed on a side of the positive electrode plate facing the separator and/or on a side of the separator, and the organic coating includes organic particles that react with dendrites containing metal elements.

In the electrode assembly provided in the present application, the organic coating is provided on a side of the positive electrode plate facing the separator and/or on a side of the separator, the organic coating includes organic particles that react with dendrites containing metal elements, dendrites containing metal elements may be formed inside a battery during use, and the dendrites growing to a certain extent will come into contact with the organic particles in the organic coating and react to generate gas, which reduces the probability of short circuits occurring inside the battery due to the electrical connection between the positive and negative electrode plates and can increase the pressure inside the battery and burst an explosion-proof valve of the battery to release pressure, thereby reducing the risk of battery explosion and improving the safety performance of the battery.

In some embodiments of the present application, the organic particles include reactive groups that react with dendrites containing sodium metal elements. The reactive groups can quickly react with the dendrites containing sodium metal elements, thereby effectively reducing the occurrence of short circuits inside the battery due to the electrical connection between the positive and negative electrode plates by the dendrites, reducing the risk of battery explosion, and then improving the safety performance of the battery.

In some embodiments of the present application, the reactive groups include at least one of carboxyl, hydroxyl, amino, thiol, phenolic hydroxyl, or biphenyl groups. The above reactive groups are prone to reaction with the dendrites containing sodium metal elements, which can effectively reduce the occurrence of electrical connection between the positive and negative electrodes by the dendrites, thereby further improving the safety performance of the battery.

In the present application, the reactive groups included in the organic particles can be measured using instruments and methods known in the art, for example, using an infrared spectrometer according to the following method:

### (1) Power-on and self-check

a. Turn on an optical table, a printer, and a computer in turn, where the optical table can be stable within 3 minutes after being turned on;
b. Start/All Programs/Thermo Scientific OMNIC, or click on a shortcut on the desktop to select desired operating software;
c. Self-check of instruments: after the software is opened, the instruments check themselves;
d. Two indicator lights at the upper left corner of the host represent laser and scan respectively, the laser indicator light is normally on, and the scan indicator light flashes. If something goes wrong, the laser indicator light is off.

### (2) Sample testing

a. Vertically place an attenuated total reflectance (ATR) test bench, screw on a probe, keep the tip of the probe at a certain height from a platform, and click OK after self-check of the instruments;
b. Place a sample on a platform detection window, align the probe with the detection window, screw down the probe clockwise to cling to the sample until a sound is heard, collect data, and obtain infrared absorption spectra of transmittance or absorbance with wave number or wavelength.

In the embodiments of the present application, selecting suitable organic particle materials can reduce the difficulty of reaction with sodium metal elements, which can improve the safety performance of the battery and reduce the manufacturing difficulty and cost of the battery.

In some embodiments of the present application, materials of the organic particles include at least one of benzoic acid, benzophenone, indoleacetic acid, phenol, or biphenyl. The materials of these organic particles mentioned above are prone to the reaction of dendrites containing sodium metal elements, and a large amount of gas (such as hydrogen gas) is generated during the reaction between the organic particles and the dendrites to rapidly increase the pressure inside the battery, which can burst the explosion-proof valve to release pressure in advance, thereby further improving the safety performance of the battery.

In the embodiments of the present application, the organic coating may be a coating in a suitable shape, which can be conducive to the emission of gas generated during the reaction between the organic coating and the dendrites and the orientated deposition of sodium ions, thereby further improving the safety and cycle performance of the battery.

In some embodiments of the present application, the organic coating includes at least one of mesh organic coatings, dot organic coatings, or striped organic coatings.

It can be understood that the organic coating may include at least one of the mesh organic coatings, the dot organic coatings, or the striped organic coatings, which is not specifically limited here by the embodiments of the present application.

In the above embodiments, the dot organic coatings and the striped organic coatings can guide the emission of gas generated by the reaction between the organic coating and the dendrites, which can quickly burst the explosion-proof valve of the battery to release pressure, thereby further improving the safety performance of the battery; the mesh organic coatings improve the safety performance of the battery, and facilitates the orientated deposition of sodium ions, thereby improving the cycle performance of the battery.

In the present application, the shape of the organic coating can be represented using well-known instruments and methods in the art, for example, the distribution shape of the organic coating on the separator and the positive electrode plate can be observed using scanning electron microscopy (SEM).

In some embodiments of the present application, the organic coating includes dot organic coatings, and the distance between the adjacent dot organic coatings in the organic coating is 0.5 µm to 50 µm. When the distance between the adjacent dot organic coatings is within the above range, the organic coating can react with dendrites to reduce the occurrence of electrical connection between the positive and negative electrodes by the dendrites. In addition, the gas generated by the reaction between the organic coating and the dendrites can be discharged from the electrode assembly along the gap between the dot organic coatings, and quickly burst the explosion-proof valve of the battery to release pressure, thereby further improving the safety performance of the battery.

In the present application, the distance between the adjacent dot organic coatings has a well-known meaning in the art and can be measured using well-known instruments and methods in the art, such as using scanning electron microscopy (SEM).

In the above embodiments, the distance between the adjacent dot organic coatings may be the same or different, and may be designed according to the difficulty level of the process and actual needs.

In some examples, the distance between the adjacent dot organic coatings may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, or in a range composed of any two of the above values, for example, the distance between the adjacent dot organic coatings may be in a range of 1 µm to 49 µm, 2 µm to 46 µm, 5 µm to 41 µm, 10 µm to 36 µm, 15 µm to 32 µm, or 20 µm to 30 µm.

In some embodiments of the present application, the organic coating includes striped organic coatings, and the distance between the adjacent striped organic coatings in the organic coating is 0.5 µm to 50 µm. The distance between the adjacent striped organic coatings within the above range facilitates the reaction between the organic coating and the dendrites, and also facilitates quick discharge of the gas generated by the reaction between the organic coating and the from the electrode assembly to burst the explosion-proof valve of the battery and release pressure, thereby further improving the safety performance of the battery.

In the present application, the distance between the adjacent striped organic coatings is a well-known meaning in the art and can be measured using well-known instruments and methods in the art, such as using scanning electron microscopy (SEM).

In the above embodiments, the distance between the adjacent striped organic coatings may be the same or different, and may be designed according to the difficulty level of the process and actual needs.

In some examples, the distance between the adjacent striped organic coatings may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 17 µm, 18 µm The range of µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, or in a range composed of any two of the above values, for example, the distance between the adjacent striped organic coatings may be in a range of 1 µm to 48 µm, 1.5 µm to 46 µm, 2.5 µm to 40 µm, 4 µm to 35 µm, 8 µm to 30 µm, 12 µm to 25 µm, or 14 µm to 20 µm.

In some embodiments of the present application, the organic coating includes a mesh organic coating, in which an average pore size of pores in the mesh organic coating is 0.5 µm to 50 µm. The average pore size of the pores in the mesh organic coating within the above range improves the safety performance of the battery, and facilitates the orientated deposition of sodium ions, thereby improving the cycle performance of the battery.

In the present application, the average pore size of the pores in the mesh organic coating is a well-known meaning in the art and can be measured using instruments and methods known in the art. For example, the average pore size of the pores in the mesh organic coating is measured using scanning electron microscopy (SEM).

In some examples, the average pore size of the pores in the mesh organic coating may be 0.5 µm, 1 µm, 1.5 µm, 2 µm, 2.5 µm, 3 µm, 3.5 µm, 4 µm, 4.5 µm, 5 µm, 5.5 µm, 6 µm, 6.5 µm, 7 µm, 7.5 µm, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, 15 µm, 15.5 µm, 16 µm, 17 µm, 18 µm The range of µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, or a range of any two of the above values, for example, the range of the average pore size of the pores in the mesh organic coating may be 1 µm to 49 µm, 1.5 µm to 45 µm, 2 µm to 41 µm, 4 µm to 34 µm, 9 µm to 29 µm, 13 µm to 23 µm, or 16 µm to 20 µm.

In some embodiments of the present application, the organic coating is disposed on a side of the positive electrode plate facing the separator. The organic coating is disposed on the side of the positive electrode plate facing the separator, which can effectively reduce the occurrence of short circuits inside the battery due to the electrical connection between the positive and negative electrodes by dendrites, thereby further improving the safety performance of the battery.

In some embodiments of the present application, the organic coating has a thickness of 2 µm to 10 µm. The thickness of the organic coating within the above range can further improve the safety performance of the battery and provide an appropriate thickness for the organic coating to fill more active materials, thereby increasing the energy density of the battery.

In the present application, the thickness of the organic coating is a well-known meaning in the art and can be measured using well-known methods in the art, such as a micrometer (such as Mitutoyo 293-100 model, with precision of 0.1 µm).

In some examples, the thickness of the organic coating may be, but is not limited to, 2 µm, 2.1 µm, 2.2 µm, 2.3 µm, 2.4 µm, 2.5 µm, 2.6 µm, 2.7 µm, 2.8 µm, 2.9 µm, 3 µm, 3.1 µm, 3.2 µm, 3.3 µm, 3.4 µm, 3.5 µm, 3.6 µm, 3.7 µm, 3.8 µm, 3.9 µm, 4 µm, 4.1 µm, 4.2 µm, 4.3 µm, 4.4 µm, 4.5 µm, 4.6 µm, 4.7 µm, 4.8 µm, 4.9 µm, 5 µm, 5.1 µm, 5.2 µm, 5.3 µm, 5.4 µm, 5.5 µm, 5.6 µm, 5.7 µm, 5.8 µm, 5.9 µm, 6 µm, 6.1 µm, 6.2 µm, 6.3 µm, 6.4 µm, 6.5 µm, 6.6 µm, 6.7 µm, 6.8 µm, 6.9 µm, 7 µm, 7.1 µm, 7.2 µm, 7.3 µm, 7.4 µm, 7.5 µm, 7.6 µm, 7.7 µm, 7.8 µm, 7.9 µm, 8 µm, 8.1 µm, 8.2 µm, 8.3 µm, 8.4 µm, 8.5 µm, 8.6 µm, 8.7 µm, 8.8 µm, 8.9 µm, 9 µm, 9.1 µm, 9.2 µm, 9.3 µm, 9.4 µm, 9.5 µm, 9.6 µm, 9.7 µm, 9.8 µm, 9.9 µm, 10 µm, or in a range composed of any two of the above values, for example, the thickness of the organic coating may be in a range of 2.1 µm to 9.8 µm, 2.5 µm to 9.2 µm, 3.1 µm to 8.5 µm, 3.5 µm to 8 µm, 3.9 µm to 7.4 µm, or 4.3 µm to 6.8 µm.

In some embodiments of the present application, the separator includes a first base film and a second base film, and the organic coating is disposed between the first base film and the second base film. The separator includes the first base film and the second base film, which can improve the mechanical strength of the separator and then reduce puncture of the separator by dendrites. Moreover, the organic coating is disposed between the first base film and the second base film, so that the organic particles in the organic coating react with the dendrites that puncture the first base film or the second base film, to further reduce complete puncture of the separator by the dendrites, thereby further improving the safety performance of the battery.

In some embodiments of the present application, the organic coating has a thickness of 2 µm to 10 µm.

In some embodiments of the present application, the first base film and the second base film each have a thickness of 5 µm to 20 µm.

In the present application, the thicknesses of the first base film and the second base film are well-known meanings in the art, and can be measured using well-known methods in the art, such as a micrometer (such as Mitutoyo 293-100 model, with precision of 0.1 µm).

In the above embodiments, the materials and thicknesses of the first base film and the second base film may be the same or different, can be selected according to actual application requirements, and are not specifically limited here by the embodiments of the present application.

In some examples, any known separator with good chemical and mechanical stability can be used. For example, the separator may include at least one of porous polyolefin resin films (such as at least one of polyethylene, polypropylene, or polyvinylidene fluoride), porous glass fibers, or porous non-woven fabrics. The porous separator may be a single-layer film or a multi-layer composite film. In the case that the porous separator is a multi-layer composite film, the materials of the layers may be the same or different.

It should be noted that relevant parameters of the separator and the organic coating are one-sided parameters.

In some embodiments of the present application, the organic coating has a surface density of 1.5 g/m² to 4.0 g/m². In the case that the surface density of the organic coating is within the above range, the organic coating can effectively reduce the electrical connection between the positive and negative electrodes by the dendrites.

In the present application, the surface density refers to the single-sided surface density of the organic coating, and it has a well-known meaning in the art and can be tested using methods known in the art. For example, the surface density can be tested according to the following steps: take a sample, punch the sample into a small round piece with an area of S1, weigh its mass, and record the mass as M1. Then remove the coating from the weighed sample, weigh the mass of the base material, and record the mass as M0.
(1) If the substrate has an organic coating on only one side, the single-sided surface density of the organic coating is (M1-M0)/S1;
(2) If the substrate has organic coatings on two sides, the single-sided surface density of the organic coatings is (M1-M0)/S1/2.

In some examples, the surface density of the organic coating may be, but is not limited to, 1.5 g/m2, 1.6 g/m2, 1.7 g/m2, 1.8 g/m2, 1.9 g/m2, 2 g/m2, 2.1 g/m2, 2.2 g/m2, 2.3 g/m2, 2.4 g/m2, 2.5 g/m2, 2.6 g/m2, 2.7 g/m2, 2.8 g/m2, 2.9 g/m2, 3 g/m2, 3.1 g/m2, 3.2 g/m2, 3.3 g/m2, 3.4 g/m2, 3.5 g/m2, 3.6 g/m2, 3.7 g/m2, 3.8 g/m2, 3.9 g/m2, 4 g/m2, or in a range composed of any two of the above values, for example, the surface density of the organic coating may be in a range of 1.6 g/m2 to 3.8 g/m2, 1.8 g/m2 to 2.5 g/m2, or 2 g/m2 to 2.3 g/m2.

In some embodiments of the present application, the organic coating further includes a binder, and based on a mass of the organic coating, a mass ratio of the binder to the organic particles is (1-5): (10-90). The addition of the binder can improve the adhesion of the organic coating, thereby improving the bonding force between the organic coating and the positive and negative electrode plates and separator, and reducing detachment of the organic coating. Moreover, in the case that the mass ratio of the binder to the organic particles satisfies the above relationship, the organic coating can have good adhesion and react with dendrites to remove more dendrites, thereby further improving the safety performance of the battery.

In some embodiments of the present application, a mass percentage of the binder in the organic coating is 1% to 5%.

In some examples, the binder may include at least one of styrene butadiene rubber (SBR), polyvinylidene fluoride (PVDF), polytetrafluoroethylene (PTFE), polyvinyl butyral (PVB), waterborne acrylic resin, or carboxymethyl cellulose (CMC).

In some embodiments of the present application, a mass percentage of the organic particles in the organic coating is 80% to 90%. In the case that the mass percentage of the organic particles in the organic coating is within the above range, the organic coating can react to remove more metal elements, thereby further reducing the electrical connection between the positive and negative electrodes by dendrites, and effectively improving the safety performance of the battery.

In some embodiments of the present application, the positive electrode plate includes a positive electrode current collector and a positive electrode active material layer disposed on a side of the positive electrode current collector and including a positive electrode active material. The embodiments of the present application do not limit the positive electrode current collector and the positive electrode active material, and can use positive electrode current collectors and positive electrode active materials known in the art.

In some embodiments of the present application, the positive electrode active material may include at least one of sodium transition metal oxides, polyanionic compounds, or Prussian blue compounds. In other embodiments of the present application, other known materials can be used as positive electrode active materials for sodium-ion batteries.

In some examples, transition metals in the sodium transition metal oxides may include at least one of Mn, Fe, Ni, Co, Cr, Cu, Ti, Zn, V, Zr, or Ce. For example, in the case that the sodium transition metal oxide is NaxMO2, M may be at least one of Ti, V, Mn, Co, Ni, Fe, Cr, or Cu, where 0 < x ≤ 1.

In other examples, the polyanionic compounds may be a type of compounds with sodium ions, transition metal ions, and tetrahedral (YO4)ⁿ⁻ anion units, where transition metals may include at least one of Mn, Fe, Ni, Co, Cr, Cu, Ti, Zn, V, Zr, or Ce, Y may include at least one of P, S, or Si, where n represents a valence state of (YO4)n-.

The polyanionic compounds may alternatively be a type of compounds with sodium ions, transition metal ions, tetrahedral (YO4)ⁿ⁻ anion units, and halogen anions, where transition metals may include at least one of Mn, Fe, Ni, Co, Cr, Cu, Ti, Zn, V, Zr, or Ce, Y may include at least one of P, S, or Si, where n represents a valence state of (YO4)ⁿ⁻, and halogens may include at least one of F, Cl, and Br.

In some specific embodiments, the polyanionic compounds may include at least one of NaFePO₄, Na₃V₂(PO4)₃, NaM'PO₄F (M' includes at least one of V, Fe, Mn, or Ni), or Na₃(VO_{y})²(PO₄)₂F_{3-2y} (0 ≤ y ≤ 1).

In some examples, the Prussian blue compounds may be a type of compounds with sodium ions, transition metal ions, and cyanide ions (CN-). Transition metals may be at least one of Mn, Fe, Ni, Co, Cr, Cu, Ti, Zn, V, Zr, or Ce. The Prussian blue compounds may be, for example, NaₐMe_{b}Me'_{c}(CN)₆, where Me and Me' independently include at least one of Ni, Cu, Fe, Mn, Co, or Zn, where 0 < a ≤ 2, 0 < b < 1, and 0 < c < 1.

In some embodiments of the present application, the positive electrode active material layer may further include a conductive agent and a binder. The embodiments of the present application do not specifically limit the types of the conductive agent and the binder in the positive electrode active material layer, which can be selected according to actual needs.

For example, the conductive agent may be, but is not limited to, at least one of graphite, superconducting carbon, acetylene black, carbon black, Ketjen black, carbon dots, carbon nanotubes, graphene, or carbon nanofibers; the binder may be, but is not limited to, at least one of styrene butadiene rubber (SBR), waterborne acrylic resin, carboxymethyl cellulose (CMC), polyvinylidene fluoride (PVDF), polytetrafluoroethylene (PTFE), polyvinyl butyral (PVB), ethylene-vinyl acetate copolymer (EVA), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, fluorinated acrylic resin, or polyvinyl alcohol (PVA).

In some embodiments of the present application, the positive electrode current collector may be made of a material such as a metal foil or a porous metal plate. For example, the material of the positive electrode current collector may be, but is not limited to, a foil or porous plate made of metals such as copper, nickel, titanium, silver, or alloys thereof. Further, in some specific embodiments of the present application, an aluminum foil is used as the positive electrode current collector.

In the embodiments of the present application, the positive electrode active material, the conductive agent, and the binder are thoroughly stirred and mixed in an appropriate amount of N-methylpyrrolidone (NMP) at a certain mass ratio to form a uniform positive electrode slurry; the positive electrode slurry is applied to the surface of the positive electrode current collector aluminum foil, and the positive electrode plate is obtained after drying, cold pressing, and die cutting.

In some embodiments of the present application, the negative electrode plate includes a negative electrode current collector. In some examples, the negative electrode current collector may be made of a material with electronic conductivity. For example, the material of the negative electrode current collector may be a copper foil, a nickel foil, a stainless steel foil, etc.

In some embodiments of the present application, the negative electrode plate may further include a negative electrode active material layer disposed on one side of the negative electrode current collector and including a negative electrode active material, but the type of the negative electrode active material is not specifically limited and can be selected by those skilled in the art according to actual needs. For example, the negative electrode active material may include at least one of carbon materials, alloy materials, transition metal oxides, transition metal sulfides, phosphorus-based materials, or titanate materials. In some specific embodiments, the negative electrode active material includes carbon materials.

In some examples, the carbon materials may include at least one of natural graphite, artificial graphite, mesocarbon microbeads (MCMB), hard carbon, or soft carbon. The alloy materials may include at least one of alloy materials composed of Si, Ge, Sn, Pb, and Sb. A chemical formula of the transition metal oxides is, for example, M¹ᵤOᵥ, where M¹ may be selected from at least one of Fe, Co, Ni, Cu, Mn, Sn, Mo, Sb, or V, au=2v, and a is a valence state of M¹. A chemical formula of the transition metal sulfides is, for example, M²ᵢSⱼ, where M² may include at least one of Fe, Co, Ni, Cu, Mn, Sn, Mo, Sb, or V, bi=2j, and b is a valence state of M². The phosphorus-based materials may include at least one of red phosphorus, white phosphorus, or black phosphorus. The titanate materials may include at least one of Na₂Ti₃O₇, Na₂Ti₆O₁₃, Na₄Ti₅O₁₂, Li₄Ti₅O₁₂, or NaTi₂(PO₄)₃.

In some embodiments of the present application, the negative electrode active material layer may further include a conductive agent and a binder. The embodiments of the present application do not specifically limit the types of the conductive agent and the binder in the negative electrode active material layer, which can be selected according to actual needs.

For example, the conductive agent may be, but is not limited to, at least one of graphite, superconducting carbon, acetylene black, carbon black, Ketjen black, carbon dots, carbon nanotubes, graphene, or carbon nanofibers; the binder may be, but is not limited to, at least one of styrene butadiene rubber (SBR), polyvinylidene fluoride (PVDF), polytetrafluoroethylene (PTFE), polyvinyl butyral (PVB), waterborne acrylic resin, or carboxymethyl cellulose (CMC).

In the embodiments of the present application, the negative electrode active material, the conductive agent, and the binder are mixed in a certain mass ratio and thoroughly stirred in an appropriate amount of deionized water to form a uniform negative electrode slurry; the negative electrode slurry is applied to the surface of the negative electrode current collector, and the negative electrode plate is obtained after drying, cold pressing, and die cutting.

In the embodiments of the present application, the electrode assembly may be produced using methods known in the art, for example, the positive electrode plate, the separator, and the negative electrode plate may be wound and/or laminated to form the electrode assembly.

### Battery cell

In a second aspect, the present application provides a battery cell, including the electrode assembly as described in the first aspect of the present application.

In some embodiments of the present application, the battery cell further includes an electrolyte, and the electrolyte includes an organic solvent and an electrolyte sodium salt. The types of the electrolyte sodium salt and the organic solvent are not specifically limited and can be selected according to actual needs. The electrolyte may include an organic solvent and an electrolyte sodium salt.

In some embodiments of the present application, the organic solvent includes ether organic solvents, for example, the ether organic solvents include at least one of diethylene glycol dimethyl ether, triethylene glycol dimethyl ether, tetraethylene glycol dimethyl ether, or tetrahydrofuran.

In some embodiments of the present application, a molar concentration of the electrolyte sodium salt in the electrolyte is 0.5 mol/L to 3 mol/L, and the electrolyte sodium salt may include at least one of sodium hexafluorophosphate, sodium fluoroborate, sodium bis(trifluoromethanesulfonyl) imide, sodium bis(fluorosulfonyl) imide, or sodium oxalate borate.

In some embodiments of the present application, the electrolyte may further optionally include additives. For example, the additives may include a negative electrode film-forming additive, a positive electrode film-forming additive, and additives that can improve some performance of the battery cell, such as an additive that improves the overcharge performance of the battery cell, an additive that improves the high-temperature performance of the battery cell, and an additive that improves the low-temperature power performance of the battery cell.

In some embodiments of the present application, the battery cell may further include an outer package. The outer package can be used for packing the aforementioned electrode assembly and electrolyte.

In some embodiments of the present application, the outer package of the battery cell may be a hard shell, such as a hard plastic shell, an aluminum shell, or a steel shell. The outer package of the battery cell may alternatively be a soft package, such as a pouch type soft package. The material of the soft package may be plastic, such as at least one of polypropylene (PP), polybutylene terephthalate (PBT), and polybutylene succinate (PBS).

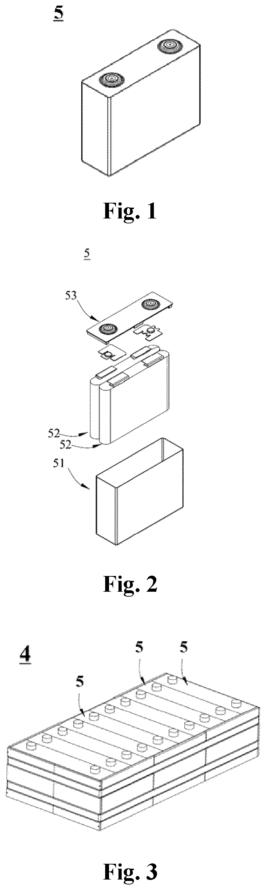

The present application does not limit the shape of the battery cell. The battery cell may be in a cylindrical, square, or any other shape. Fig. 1 shows a square battery cell 5 as an example.

In some embodiments of the present application, as shown in Fig. 2, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 is configured to cover the opening to seal the accommodating cavity. In addition, the cover plate 53 is provided with an explosion-proof valve. In the case that the pressure inside the shell reaches a specified value, the gas pressure will burst the explosion-proof valve, so that the explosion-proof valve is opened to discharge gas, thereby avoiding explosion of the battery cell. The positive electrode plate, the negative electrode plate, and the separator may be wound and/or stacked to form an electrode assembly 52. The electrode assembly 52 is packaged in the accommodating cavity. An electrolytic solution infiltrates the electrode assembly 52. The battery cell 5 may include one or more electrode assemblies 52, which may be adjusted on demand.

The method for producing the battery cell of the present application is well known. In some embodiments of the present application, the positive electrode plate, the separator, the negative electrode plate, and the electrolyte may be assembled to form the battery cell. As an example, the positive electrode plate, the separator, and the negative electrode plate may be wound and/or laminated to form the electrode assembly, the electrode assembly is placed in an outer package, then the electrolyte is injected after drying, and the battery cell is obtained after vacuum packaging, standing, formation, shaping, etc.

### Battery

In a third aspect, the present application provides a battery, including the battery cell in the second aspect of the present application.

In the embodiments of the present application, in order to meet different power requirements, the battery may include a plurality of battery cells, which refer to minimum units that constitute a battery module or battery pack. The plurality of battery cells may be connected in series and/or in parallel via electrode terminals for various applications. The battery mentioned in the embodiments of the present application includes a battery module or battery pack. The plurality of battery cells may be connected in series, in parallel, or in series and parallel. The series and parallel connection refers to a combination of series connection and parallel connection. In the embodiments of the present application, the plurality of battery cells may be directly combined into a battery pack, or may be first combined into a battery module, which then forms a battery pack.

In some embodiments of the present application, the battery cell according to the second aspect of the present application may be assembled into a battery module, the battery module may include a plurality of battery cells, and the specific quantity can be adjusted according to the application and capacity of the battery module.

Fig. 3 is a schematic structural view of a battery module as an example. As shown in Fig. 3, in the battery module 4, the plurality of battery cells 5 may be arranged sequentially in a length direction of the battery module 4. Alternatively, the battery cells may be arranged in any other manner. Further, the plurality of battery cells 5 may be fixed by fasteners.

Optionally, the battery module 4 may further include a housing with an accommodating space, and the plurality of battery cells 5 are accommodated in the accommodating space.

In some embodiments of the present application, the battery module mentioned above can be assembled into a battery pack, and the quantity of battery modules included in the battery pack can be adjusted according to the application and capacity of the battery pack.

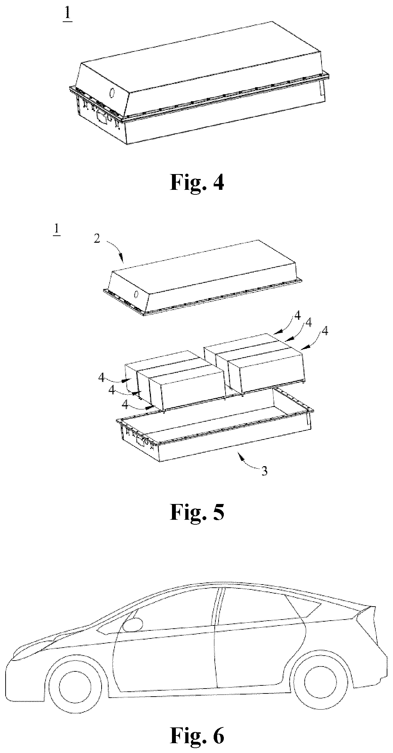

Fig. 4 and Fig. 5 are schematic structural views of a battery pack as an example. As shown in Fig. 4 and Fig. 5, the battery pack 1 may include a battery box and a plurality of battery modules 4 disposed in the battery box. The battery box includes an upper box 2 and a lower box 3. The upper box 2 is to fit on the lower box 3 to form a closed space for accommodating the battery modules 4. The plurality of battery modules 4 may be arranged in the battery box in any manner.

### Electrical device

In a fourth aspect, the present application provides an electrical device, which includes at least one of the battery cell, battery module, or battery pack in the second aspect of the present application. The battery cell, battery module, or battery pack may be used as a power supply for the electrical device or as an energy storage unit of the electrical device.

In the present application, the electrical device may include, but is not limited to, a mobile phone, a tablet, a laptop, an electric toy, an electric tool, a scooter, an electric vehicle, a ship, a spacecraft, an energy storage system, etc. The electric toy may include a fixed or mobile electric toy, such as a game console, an electric car toy, an electric ship toy, or an electric aircraft toy. The spacecraft may include an airplane, a rocket, a space shuttle, a spaceship, etc.

Moreover, the electrical device may include the battery cell, battery module, or battery pack according to its usage requirements.

Fig. 6 is a schematic structural view of an electrical device as an example. The electrical device is a full electric vehicle, a hybrid electric vehicle, a plug-in hybrid electric vehicle, or the like. In order to meet the requirements of the electrical device for high power and high energy density, the battery pack or the battery module may be used.

The following examples more specifically describe the content disclosed in the present application, and these examples are only used for explanatory description, because various modifications and changes made within the scope of the content disclosed in the present application are apparent to those skilled in the art. All reagents used in the examples are commercially available or synthesized according to conventional methods and can be directly used without further treatment, and all instruments used in the examples are commercially available.

### Example 1

### Production of a positive electrode plate

A positive electrode active material NaFePO₄, a conductive agent acetylene black, and a binder carboxymethyl cellulose were thoroughly stirred and mixed in an appropriate amount of N-methylpyrrolidone (NMP) at a mass ratio of 95: 2: 3 to form a uniform positive electrode slurry; the positive electrode slurry is applied to the surface of a positive electrode current collector aluminum foil, and a positive electrode plate was obtained after drying, cold pressing, and die cutting.

### Production of a negative electrode plate

A negative electrode active material artificial graphite, a conductive agent acetylene black, and a binder carboxymethyl cellulose were mixed in a mass ratio of 94: 5: 1 and thoroughly stirred in an appropriate amount of deionized water to form a uniform negative electrode slurry; the negative electrode slurry was applied to the surface of a negative electrode current collector copper foil, and a negative electrode plate was obtained after drying, cold pressing, and die cutting.

### Separator

Two layers of polyethylene film were used, with each layer having a thickness of 10 µm.

### Production of an organic coating

Biphenyl organic particles and a binder carboxymethyl cellulose were mixed in a mass ratio of 7: 1 to form an organic coating slurry; the organic coating slurry is applied between the two layers of polyethylene film and dried to form an organic coating having a thickness of 4 µm and a surface density of 2.0 g/m².

### Production of an electrolyte

In a glove box having a water content of < 1 ppm and filled with argon gas, diethylene glycol dimethyl ether and tetrahydrofuran were mixed in a mass ratio of 1: 3 and added with 1.0 mol/L sodium hexafluorophosphate (NaPF₆), and an electrolyte was obtained after uniform stirring.

### Production of a sodium-ion secondary battery

The positive electrode plate, the separator, the organic coating, and the negative electrode plate were wound and/or laminated to form an electrode assembly, the electrode assembly was placed in an outer package, the electrolyte was injected after drying, and a sodium-ion secondary battery was obtained after vacuum packaging, standing, chemical transformation, shaping, etc.

### Examples 2-10

Similar to the method in Example 1, the difference lies in the composition and content of the organic coating.

### Comparative Example 1

Similar to the method in Example 1, the difference was that there was no organic coating in the electrode assembly.

### Examples 11-18

Similar to the producing method in Example 1, the difference lies in the thickness and surface density of the organic coating.

### Test section

### (1) Gas production rate test

A testing method was as follows.

An assembled battery was baked and injected with an electrolytic solution, then the battery injection hole was sealed, and after activation at room temperature, metal strips were welded to the positive and negative electrode plates of the battery to obtain an activated battery, where the battery injection hole was sealed with an OPP beige adhesive paper, an aluminum strip was welded to the positive electrode plate through an ultrasonic welding machine, and a nickel strip was welded to the negative electrode plate through an internal resistance welding machine;

The activated battery was fixed to a fixture, and the metal strips on the positive and negative electrode plates were correspondingly connected to positive and negative electrodes of a charging and discharging device by wires, where the wire was a 2.5 mm² copper wire, a crocodile clip was welded to one end of the connected metal strip, and the charging and discharging device was a lithium battery formation test cabinet and was placed in a dry workshop with a dew point ≤ 5°C, a humidity ≤ 20% RH, and a temperature ≤ 28°C;

The activated battery was connected to a power supply and pre-charged, and time and digital pressure gage values before and during charging in the case that the explosion-proof valve was burst were recorded;

The time t and pressure P required to burst the explosion-proof valve were calculated according to the digital pressure gage values before and during charging, a volume V of gas was calculated according to a formula PV = nRT, and then a gas production rate equal to V/t was calculated, where a critical value for bursting the explosion-proof valve was 0.65 MPa.

Table 1 lists relevant parameters of the organic coating and test results in Examples 1-10 and Comparative Example 1, respectively.

**Table 1**

| Number | Organic coating | | Gas production rate | Explosion-proof valve |
|---|---|---|---|---|
| | Material of organic particles, mass percentage% | Binder, mass percentage% | | |
| Example 1 | Biphenyl, 70% | PVDF 1% | 1 mL/min | Burst |
| Example 2 | Biphenyl, 75% | PVDF 1% | 1.2 mL/min | Burst |
| Example 3 | Biphenyl, 80% | PVDF 1% | 1.5 mL/min | Burst |
| Example 4 | Biphenyl, 85% | PVDF 1% | 1.8 mL/min | Burst |
| Example 5 | Biphenyl, 90% | PVDF 1% | 2.0 mL/min | Burst |
| Example 6 | Biphenyl, 85% | PVDF 1% | 1.8 mL/min | Burst |
| Example 7 | Phenol, 85% | PVDF 1% | 1.7 mL/min | Burst |
| Example 8 | Benzoic acid, 85% | PVDF 1% | 1.65 mL/min | Burst |
| Example 9 | Benzophenone, 85% | PVDF 1% | 1.5 mL/min | Burst |
| Example 10 | Azoindoleacetic acid, 85% | PVDF 1% | 1.75 mL/min | Burst |
| Comparative Example 1 | None | None | 0 | Not burst |

According to Table 1, comparing the test results of Examples 1-10 and Comparative Example 1, it can be seen that in the electrode assembly of the present application, the organic coating is provided on a side of the positive electrode plate facing the separator and/or on a side of the separator, the organic coating includes organic particles that react with dendrites containing metal elements, dendrites containing metal elements may be formed inside a battery during use, and the dendrites growing to a certain extent will come into contact with the organic particles in the organic coating and react to generate gas, which reduces the probability of short circuits occurring inside the battery due to the electrical connection between the positive and negative electrode plates and can increase the pressure inside the battery and burst an explosion-proof valve of the battery to release pressure, thereby reducing the risk of battery explosion and improving the safety performance of the battery.

Table 2 lists relevant parameters of the organic coating and test results in Examples 11-18.

**Table 2**

| Number | Organic coating | | Gas production rate | Explosion-proof valve |
|---|---|---|---|---|
| | Thickness | Surface density | | |
| Example 11 | 2 µm | 1.5 g/m² | 0.5 mL/min | Burst |
| Example 12 | 4 µm | 1.5 g/m² | 1.8 mL/min | Burst |
| Example 13 | 6 µm | 1.5 g/m² | 2.0 mL/min | Burst |
| Example 14 | 8 µm | 1.5 g/m² | 2.5 mL/min | Burst |
| Example 15 | 4 µm | 2.0 g/m² | 2.0 mL/min | Burst |
| Example 16 | 4 µm | 2.5 g/m² | 2.2 mL/min | Burst |
| Example 17 | 4 µm | 3.0 g/m² | 2.4 mL/min | Burst |
| Example 18 | 4 µm | 3.5 g/m² | 2.6 mL/min | Burst |

According to Table 2, it can be seen that in the case that the thickness and surface density of the organic coating are within appropriate ranges respectively, the rate of gas generation by the reaction of dendrites and organic particles in the organic coating can be increased, which can further reduce the probability of short circuits occurring inside the battery due to the electrical connection between the positive and negative electrode plates, quickly increase the pressure inside the battery and burst the explosion-proof valve of the battery to release pressure, thereby reducing the risk of battery explosion and improving the safety performance of the battery.

Finally, it should be noted that the foregoing embodiments are only used to describe, but not to limit, the technical solutions of the present application. Although the present application is described in detail with reference to the foregoing embodiments, those of ordinary skill in the art should understand that they can still make modifications to the technical solutions described in the foregoing embodiments or make equivalent substitutions to some or all technical features thereof. These modifications or substitutions do not make the essences of the corresponding technical solutions depart from the scope of the technical solutions of the embodiments of the present application, and shall fall within the scope of the claims and specification of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. An electrode assembly, comprising:
a positive electrode plate;
a negative electrode plate;
a separator disposed between the positive electrode plate and the negative electrode plate; and
an organic coating disposed on a side of the positive electrode plate facing the separator and/or on a side of the separator, wherein the organic coating comprises organic particles that are reactive with dendrites containing elemental metal.

2. The electrode assembly according to claim 1, wherein the organic particles comprise a reactive group that is reactive with dendrites containing elemental sodium metal; and
optionally, the reactive group comprises at least one of carboxyl, hydroxyl, amino, thiol, phenolic hydroxyl, or biphenyl groups.

3. The electrode assembly according to any one of claims 1-2, wherein materials of the organic particles comprise at least one of benzoic acid, benzophenone, azoindoleacetic acid, phenol, or biphenyl.

4. The electrode assembly according to any one of claims 1-3, wherein the organic coating comprises at least one of netlike organic coatings, dotlike organic coatings, or stripe-like organic coatings.

5. The electrode assembly according to any one of claims 1-4, wherein the organic coating is disposed on a side of the positive electrode plate facing the separator.

6. The electrode assembly according to any one of claims 1-5, wherein the organic coating has a thickness of 2 µm to 10 µm.

7. The electrode assembly according to any one of claims 1-6, wherein the separator comprises a first base film and a second base film, and the organic coating is disposed between the first base film and the second base film.

8. The electrode assembly according to claim 7, wherein the organic coating has a thickness of 2 µm to 10 µm; and/or
the first base film has a thickness of 5 µm to 20 µm; and/or
the second base film has a thickness of 5 µm to 20 µm.

9. The electrode assembly according to any one of claims 1-8, wherein the organic coating has a surface density of 1.5 g/m² to 4.0 g/m².

10. The electrode assembly according to any one of claims 1-9, wherein the organic coating further comprises a binder, and based on a mass of the organic coating, a mass ratio of the binder to the organic particles is (1-5): (10-90);
optionally, a mass percentage of the binder in the organic coating is 1% to 5%; and
optionally, a mass percentage of the organic particles in the organic coating is 80% to 90%.

11. A battery cell, comprising the electrode assembly according to any one of claims 1-10.

12. A battery, comprising the battery cell according to claim 11.

13. An electrical device, comprising the battery according to claim 12.
